# EUROPÄISCHE PATENTANMELDUNG

(11) **EP 3 098 020 A1**
(43) Veröffentlichungstag der Anmeldung: **30.11.2016**
(21) Anmeldenummer: 16171656.8
(22) Anmeldetag: 27.05.2016
(51) Int. Cl.: B23K 35/26, B23K 35/36, B23K 35/368, B23K 35/02, C22C 13/00

(54) **RÖHRENLOT, INSBESONDERE ZUM WEICHLÖTEN VON ALUMINIUM**

(30) Priorität: 29.05.2015 DE 102015108485
(71) Anmelder: ELSOLD GmbH & Co. KG, 38871 Ilsenburg (DE)
(72) Erfinder: KOPP, Nils, 38667 Bad Harzburg (DE)
(74) Vertreter: Ahrens, Gabriele

(57) **Zusammenfassung**

Die vorliegende Erfindung betrifft ein Röhrenlot, das insbesondere geeignet ist für das Weichlöten von Aluminium und dessen Legierungen, wobei das Röhrenlot ein Lotmaterial aus einer Legierung auf Zinnbasis sowie ein Flussmittel, das vor Korrosion schützt, aufweist, wobei das Flussmittel modifiziertes Kolophonium, Triethanolamin, ein Fluorid sowie gegebenenfalls Wasser aufweist, sowie die Verwendung des Röhrenlots beziehungsweise des Flussmittels für das Weichlöten von Aluminium und dessen Legierungen.

## Beschreibung

Die vorliegende Erfindung betrifft ein Röhrenlot, das insbesondere zum Weichlöten von Aluminium geeignet ist.

Als Löten wird die Verbindung von Metallteilen mittels eines Lotmaterials, typischerweise einer Metalllegierung, bezeichnet. Das geschmolzene Lotmaterial wird auf ein Metallteil aufgebracht und dieses mit einem weiteren Metallteil verbunden. Anders als beim Schweißen werden die Metallteile als solche nicht geschmolzen. Es wird lediglich das Lotmaterial geschmolzen, das folglich eine niedrigere Schmelztemperatur hat als die Metallteile. Das geschmolzene Lotmaterial diffundiert in die Oberfläche der Metallteile ein und bildet zwischen den Metallteilen eine feste Verbindung aus.

Als Weichlöten werden Lötvorgänge bei Temperaturen bis circa 450°C bezeichnet, wobei entsprechend Lotmaterialien eingesetzt werden, die unterhalb dieser Temperatur schmelzen. Oberhalb von 450°C findet Hartlöten statt.

Für die Festigkeit der Lötverbindung kommt es wesentlich darauf an, dass das Lotmaterial die Oberfläche des Metallteils gut benetzen kann. Voraussetzung für eine gute Benetzung ist aber, dass die Oberfläche frei von Verunreinigungen und Oberflächenschichten ist.

Dies ist ein besonderes Problem bei Aluminium. Aluminium ist hochreaktiv und bildet bei Kontakt mit Luft eine kompakte, äußerst stabile Oxidschicht aus, die die ganze Oberfläche bedeckt. Diese Oxidschicht muss entfernt werden, da andernfalls kein Weichlöten möglich ist. Zudem muss verhindert werden, dass das hochreaktive Aluminium beim Lötvorgang erneut eine Oxidschicht ausbildet.

Es ist bekannt zum Weichlöten von Aluminium Lotmaterialien zusammen mit einem Flussmittel einzusetzen. Das Flussmittel hat die Aufgabe die Oxidschicht zu entfernen und zugleich die Neubildung der Oxidschicht während des Lötvorgangs zu verhindern.

Weiter ist es bekannt Röhrenlote als Lotmittel einzusetzen. Röhrenlote sind eine Kombination aus Lotmaterial und Flussmittel, wobei das Lotmaterial in Form eines Hohldrahtes vorliegt, der zumindest teilweise mit dem Flussmittel gefüllt ist.

Bekannte Röhrenlote zum Weichlöten von Aluminium setzen als Flussmittel organische Systeme mit Halogeniden ein, zum Beispiel eine Mischung aus 2-(2-Aminoethylamino)ethanol und Ammoniumhydrogendifluorid (Ammoniumbifluorid). Da die halogenidhaltigen Rückstände dieser Flussmittel hochkorrosiv sind, müssen die gelöteten Aluminiumbauteile anschließend sorgfältig mit Wasser gewaschen werden, um eine Korrosion zu vermeiden. Die Notwendigkeit eines Waschvorgangs erfordert zum Einen einen zusätzlichen Aufwand. Zum Anderen können die gelöteten Bauteile, zum Beispiel auf Grund ihrer Form, häufig nicht oder nicht vollständig gereinigt werden, so dass ein erhöhtes Korrosionsrisiko verbleibt.

So finden Aluminium sowie Legierungen auf Aluminiumbasis zunehmend Verwendung in der Elektronik und Mikroelektronik, zum Beispiel als Ersatz von Kupfer, auf Grund seiner Leichtigkeit und seines verhältnismäßig günstigen Preises. Bauteile für diese Anwendungen sind häufig sehr klein und weisen Konturen auf, die nur schwer oder gar nicht gereinigt werden können. So ist zum Beispiel bei der Lötung von mikroelektronischen Bauteilen auf Leiterplatten eine nachträgliche Reinigung nicht sinnvoll, weil die Abstände zwischen den Bauteilen und der Leiterplatte so klein sind, dass eine optimale Reinigung nicht mehr möglich ist.

Zur Lösung dieses Problems der Reinigung und der dadurch bedingten Korrosionsgefahr beschreibt US 3,655,461 ein Flussmittel auf Basis eines härtbaren Epoxidharzes und eines natürlichen Harzes. Das Flussmittel enthält zudem ein Fluoroborat eines Schwermetalls sowie Triethanolamin. Das Fluoroborat beseitigt einerseits die Oxidschicht und bewirkt andererseits die Vernetzung der Harzkomponente mit dem Triethanolamin. Im Ergebnis wird unter Verbrauch des Fluoroborats eine Kunststoffschicht auf dem Bauteil ausgebildet, die vor Korrosion schützt. Von Nachteil ist jedoch, dass das Flussmittel ein 2-Komponentensystem ist, wobei das Harz der Mischung aus Fluoroborat und Triethanolamin erst unmittelbar vor dem Lötvorgang zugesetzt werden kann, um eine vorzeitige Härtung zu vermeiden. Auch erfolgt die Vernetzungsreaktion bereits bei Temperaturen ab 100°C, das heißt bei Temperaturen, wie sie bei der Drahtherstellung üblich sind. Es versteht sich, dass ein derartiges System zur Anwendung in einem Röhrenlot ungeeignet ist.

DE 10 2007 007 212 A1 beschreibt als Alternative zu den bekannten flussmittelgefüllten Lotdrähten ein Lötmittel aus einem Lotmaterial und einem nichtkorrosiv wirkenden Flussmittel, wobei das Lotmaterial ein Massivdraht ist, dessen Außenoberfläche mit einer Beschichtung des Flussmittels versehen ist. Das Flussmittel enthält als Hauptkomponente eine Trägerharzsubstanz, die ein modifiziertes Naturharz oder ein Naturharzderivat sein kann, wie hydriertes Kolophonium, polymerisiertes Kolophonium oder Kolophonium-Glycerinester. Optionale Komponenten sind ein Aktivator, zum Beispiel Salze, die Halogenwasserstoffe freisetzen, und ein Streckmittel, zum Beispiel ein synthetisches Wachs.
Zudem enthält das Flussmittel einen Weichmacher, zum Beispiel einen Ester einer organischen Säure, der eine vorzeitige Ablösung der Beschichtung von der Metalloberfläche vermeiden soll.

Als problematisch bei einem derart aufgebauten Röhrenlot erweist sich die meist klebrige Konsistenz der zur Verwendung vorgesehenen Flussmittel. Dies kann zu Flussmitteldelaminationen führen und damit dazu, dass die entstehenden Röhrenlote außen fehlerhaft werden und sogar darüber hinaus durch unerwünschte Verteilung der Flussmittel vor der eigentlichen Verwendung zu weiteren Störungen führen. Auch ist die Aktivität des beschriebenen Flussmittels zu gering, um die stabile Aluminiumoxidschicht beseitigen zu können.

EP 2 862 667 A1 beschreibt ein Flussmittel insbesondere zur Verwendung für das Löten von Aluminium, das störende Metalloxidschichten auf den zu lötenden Komponenten entfernen kann. Das Flussmittel weist ein Basismaterial wie Kolophonium, wenigstens ein Amin und ein Aminfluoridsalz auf, das durch Reaktion von Amin und einer Säure gebildet wird. Als Amine finden aromatische Amine Verwendung wie ein Pyridinderivat, ein Imidazolderivat, ein Guanidinderivat, Ethylamin und Picoperin. Weiter wird beschrieben, dass das Flussmittel auch für ein Röhrenlot eingesetzt werden kann.

Es besteht jedoch unverändert ein erheblicher Bedarf an Röhrenloten insbesondere zum Weichlöten von Aluminium, die ein Flussmittel aufweisen, das Korrosion verhindert, so dass nach dem Löten kein Waschvorgang der gelöteten Bauteile erforderlich ist.

Diese Aufgabe wird erfindungsgemäß gelöst durch ein Röhrenlot aus einem Lotmaterial auf Zinnbasis und einem Flussmittel, wobei das Flussmittel einen Gehalt (in Gew.-%) von
40 bis 70% modifiziertes Kolophonium,
20 bis 40% Triethanolamin,
1 bis 5% eines Fluorids sowie
0 bis 15% Wasser
aufweist.

Das erfindungsgemäße Flussmittel kann die äußerst kompakte und stabile Aluminiumoxidschicht, die Bauteilen aus Aluminium anhaftet, entfernen, so dass Weichlöten dieser Bauteile möglich wird. Andererseits wirkt es korrosionsverhindernd, so dass nachgeschaltete Waschvorgänge zur Beseitigung von Rückständen des Flussmittels nicht erforderlich sind.

Das modifizierte Kolophonium kann ein beliebiges chemisch modifiziertes Kolophonium sein, wie es für die Herstellung von Flussmitteln bekannt ist. Beispiele hierfür sind partiell oder vollständig hydriertes Kolophonium, dimeres oder polymerisiertes Kolophonium, Kolophonium-Glycerinester.

Triethanolamin und das Fluorid wirken als Aktivatoren und unterstützen die Entfernung der Aluminiumoxidschicht.

Grundsätzlich können ionische Fluoride eingesetzt werden, die eine geeignete Löslichkeit und Temperaturbeständigkeit aufweisen und zudem keine unerwünschten Reaktionen mit den anderen Flussmittelbestandteilen beim Schmelzen zeigen.
Ein Beispiel für ein geeignetes ionisches Fluorid ist Ammoniumhydrogendifluorid.

Das erfindungsgemäße Flussmittel enthält 1 bis 5 Gew.-%, vorzugsweise 2 bis 4 Gew.-% und insbesondere 2,5 bis 3,5 Gew.-% eines oder mehrerer Fluoride. Vorzugsweise wird als Fluorid Ammoniumhydrogendifluorid verwendet.

Triethanolamin wirkt gleichfalls als Aktivator und liegt in dem erfindungsgemäßen Flussmittel in einem Gehalt von 20 bis 40 Gew.-%, vorzugsweise von 25 bis 35 Gew.-% und insbesondere von 28 bis 32 Gew.-% vor.

Bei Bedarf kann dem erfindungsgemäßen Flussmittel Wasser zugesetzt werden, um zum Beispiel die Löslichkeit des Fluorids wie Ammoniumhydrogendifluorid, zu unterstützen.

Erfindungsgemäß wird für die Herstellung des Röhrenlots ein Lotmaterial verwendet, das eine Legierung auf Zinnbasis ist.
Die Legierung enthält mindestens 90 Gew.-% Zinn.
Daneben können als weitere Legierungsbestandteile Silber, Kupfer oder beide Metalle vorliegen.

Weiter kann die Legierung bei Bedarf ein oder mehrere Mikrolegierungselemente aufweisen. Beispiele für Mikrolegierungselemente sind Nickel, Germanium, Phosphor.
Dabei kann Phosphor in einem Gehaltsbereich von 0,001 bis 0,1 Gew.-%, Germanium von 0,001 bis 0,1 Gew.-% und Nickel < 0,5 Gew.-% vorliegen. Beispielsweise kann gemäß einer Ausführungsform 0,004 Gew.-% Phosphor, 0,006 Gew.-% Germanium und/oder 0,03 Gew.-% Nickel vorliegen. Nachstehend werden einige besonders vorteilhafte Beispiele von Legierungen auf Zinnbasis aufgeführt, wie sie erfindungsgemäß eingesetzt werden können (in Gew.-%):
1. Zinn, Kupfer 0,3 bis 4%;
2. Zinn, Kupfer 0,3 bis 4%, Silber 1 bis 5%;
3. Zinn, Silber 1 bis 5%;
4. eine Legierung gemäß der Beispiele 1 bis 3 jeweils zusätzlich enthaltend mindestens ein Mikrolegierungselement ausgewählt aus der Gruppe bestehend aus Nickel, Germanium und Phosphor;
5. eine Legierung gemäß einem der Beispiele 1 bis 3 jeweils enthaltend die Mikrolegierungselemente Nickel, Germanium und Phosphor.

Gemäß einer Ausführungsform kann der Kupfergehalt in den vorstehend genannten Legierungen 0,3 bis 2 Gew.-% betragen.

Aus dem erfindungsgemäß eingesetzten Lotmaterial auf Zinnbasis wird auf an sich bekannte Art und Weise ein Hohldraht hergestellt, der ein oder auch mehrere Seelen aus dem erfindungsgemäßen Flussmittel enthält.

Beispielsweise kann der Hohldraht aus Lotmaterial durch Extrusion erzeugt und mit Flussmittel gefüllt werden. Die Befüllung mit Flussmittel kann vorzugsweise während der Extrusion erfolgen. Anschließend wird der extrudierte Strang auf den gewünschten Durchmesser gezogen und/oder gewalzt und als gebrauchsfertiges Lotmittel zum Beispiel auf Rollen aufgespult.
Ein besonders vorteilhaftes Verfahren ist in der deutschen Patentanmeldung DE 10 2009 033 406 A1 des vorliegenden Anmelders angeführt, auf die hierfür verwiesen wird.

Das Röhrenlot mit Flussmittelseele setzt sich vorzugsweise aus 90 bis 99,5 Gew.-% des Lotmaterials auf Zinnbasis und entsprechend 0,5 bis 10 Gew.-% des Flussmittels zusammen. Besonders bevorzugt ist eine Zusammensetzung aus 96,5 Gew.-% Lotmaterial auf Zinnbasis und entsprechend 3,5 Gew.-% Flussmittel.

Es hat sich gezeigt, dass das modifizierte Kolophonium des Flussmittels eine Schicht ausbildet, die die Fügestelle der gelöteten Bauteile vor Korrosion schützt, so dass kein Korrosionsrisiko durch Rückstände des Flussmittels besteht beziehungsweise das Korrosionsrisiko zumindest deutlich reduziert werden kann.

Das erfindungsgemäße Röhrenlot löst effektiv die störende Oxidschicht, die insbesondere Bauteilen aus Aluminium oder Aluminiumlegierungen anhaftet, verhindert die Neubildung einer Oxidschicht und wirkt korrosionsschützend, ohne dass ein Waschen notwendig ist.

Falls erforderlich lassen sich unerwünschte Rückstände des Flussmittels auf einfache Art und Weise mit einem Lösungsmittel wie zum Beispiel Isopropanol entfernen.

Das erfindungsgemäße Röhrenlot eignet sich nicht nur ausgezeichnet zum Weichlöten von Aluminium sondern gleichermaßen von Aluminiumlegierungen, das heißt Legierungen deren Hauptbestandteil Aluminium ist, sowie von anderen oxidschichtbildenden Metallen und Metalllegierungen, wie zum Beispiel Titan, Tantal, deren Legierungen und rostfreier Stahl.
Es ist jedoch anzumerken, dass Aluminium und dessen Legierungen eine besonders feste und stabile Oxidschicht aufweisen, so dass hier eine ausreichende Entfernung besonders schwierig ist.

Das erfindungsgemäße Flussmittel bildet eine schützende Harzschicht aus, ohne dass es erforderlich ist zur Härtung und Schichtbildung eine reaktive weitere Komponente unmittelbar vor Einsatz des Lotmittels zum Flussmittel dazuzugeben. Es eignet sich daher hervorragend als korrosionsschützende Flussmittelseele für ein Röhrenlot.

## Patentansprüche

1. Röhrenlot aus einem Lotmaterial, das eine Legierung auf Zinnbasis ist, und einem Flussmittel,
**wobei** das Flussmittel in Gewichtsprozent
40 bis 70% modifiziertes Kolophonium,
20 bis 40% Triethanolamin,
1 bis 5% eines Fluorids sowie
0 bis 15% Wasser
aufweist.

2. Röhrenlot nach Anspruch 1,
**wobei** der Gewichtsanteil in Gewichtsprozent an Lotmaterial 90 bis 99,5% und der des Flussmittels 0,5 bis 10 % beträgt.

3. Röhrenlot nach Anspruch 1 oder 2,
**wobei** die Legierung auf Zinnbasis mindestens 90 Gew.-% Zinn aufweist.

4. Röhrenlot nach Anspruch 3,
**wobei** zusätzlich mindestens ein weiterer Legierungsbestandteil ausgewählt unter Silber und Kupfer enthalten ist.

5. Röhrenlot nach einem der vorhergehenden Ansprüche,
**wobei** die Legierung auf Zinnbasis neben Zinn 0,3 bis 4 Gew.-% Kupfer aufweist.

6. Röhrenlot nach einem der vorhergehenden Ansprüche,
**wobei** die Legierung auf Zinnbasis 1 bis 5 Gew.-% Silber aufweist.

7. Röhrenlot nach einem der Ansprüche 1 bis 6,
**wobei** die Legierung auf Zinnbasis mindestens ein Mikrolegierungselement ausgewählt unter Nickel, Germanium und Phosphor aufweist.

8. Flussmittel mit einer Zusammensetzung in Gewichtsprozent von 40 bis 70% modifiziertes Kolophonium,
20 bis 40% Triethanolamin,
1 bis 5% eines Fluorids sowie
0 bis 15% Wasser.

9. Flussmittel nach Anspruch 8,
**wobei** das Fluorid Ammoniumhydrogendifluorid ist.

10. Flussmittel nach Anspruch 8 oder 9,
**wobei** das modifizierte Kolophonium partiell oder vollständig hydriertes Kolophonium, dimeres oder polymerisiertes Kolophonium oder Kolophonium-Glycerinester ist.

11. Verwendung eines Röhrenlots nach einem der Ansprüche 1 bis 7 oder eines Flussmittels nach einem der Ansprüche 8 bis 10 für das Weichlöten von Aluminium und Aluminiumlegierungen.
